(19) Europäisches Patentamt
European Patent Office
Office européen des brevets

(11) Veröffentlichungsnummer: **0 213 286 B1**

# (12) EUROPÄISCHE PATENTSCHRIFT

(45) Veröffentlichungstag der Patentschrift: **23.08.89**

(51) Int. Cl.⁴: **C08G 69/32**

(21) Anmeldenummer: **86107468.0**

(22) Anmeldetag: **02.06.86**

(54) **Verfahren zur Herstellung aromatischer Polyamide.**

(30) Priorität: **25.07.85 DE 3526622**

(43) Veröffentlichungstag der Anmeldung: **11.03.87 Patentblatt 87/11**

(45) Bekanntmachung des Hinweises auf die Patenterteilung: **23.08.89 Patentblatt 89/34**

(84) Benannte Vertragsstaaten: **AT BE CH DE FR GB IT LI NL**

(56) Entgegenhaltungen:
**EP-A- 0 099 997**
**DE-A- 1 620 882**
**DE-A- 1 903 586**
**DE-A- 2 538 143**
**US-A- 3 554 971**

**JOURNAL OF POLYMER SCIENCE: POLYMER CHEMISTRY EDITION, Band 22, 1984, Seiten 2579-2599; S.H. AHARONI et al.: "Reactions in the presence of organic phesphites, II: Low-temperature amidation in solvent"**
**PATENT ABSTRACTS OF JAPAN, Band 1, Nr. 97 (C-77), 30. August 1977, Seite 2152 C 77; & JP - A - 52 58796 (TEIJIN K.K.) 14.05.1977**
**JOURNAL OF POLYMER SCIENCE: POLYMER CHEMISTRY EDITION, Band 18, 1980, Seiten 1711-1717;**

(73) Patentinhaber: **HÜLS AKTIENGESELLSCHAFT, Patentabteilung / PB 15 - Postfach 13 20, D-4370 Marl 1(DE)**

(72) Erfinder: **Bartmann, Martin, Dr., Burgstrasse 35, D-4350 Recklinghausen(DE)**

(56) Entgegenhaltungen: (Fortsetzung)
**F. HIGASHI et al.: "Synthesis of Polyamides by a new direct polycondensation reaction using triphenyl phosphite and lithium chloride"**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Aromatische Polyamide zeichnen sich durch hohe Temperaturbeständigkeit und gute mechanische Eigenschaften aus. Sie werden insbesondere zur Herstellung von Fasern und Folien eingesetzt (s. Elias/Vohwinkel, "Neue polymere Werkstoffe für die industrielle Anwendung", 2. Folge, Carl Hanser Verlag 1983, Seite 242 f.).

Bekannte Verfahren zur Herstellung von aromatischen Polyamiden sind:

1. Tieftemperatur-Lösungspolykondensation durch Umsetzung von aromatischen Dicarbonsäuredichloriden mit aromatischen Diaminen in polaren Lösungsmitteln (US-PSS 32 87 324, 35 41 056, 36 00 350, 38 19 587, 37 67 756, 38 69 429, 36 73 143, 38 17 941, 30 63 966 und DE-AS 22 19 703).
2. Grenzflächenpolykondensation durch Reaktion zwischen einem aromatischen Dicarbonsäuredichlorid und einem aromatischen Diamin an der Grenzfläche einer organischen und einer wäßrigen Phase (DE-OSS 19 08 297, 23 25 139 und DE-PS 30 06 899).

Aromatische Polyamide können auch durch Reaktion von aromatischen Dicarbonsäuren mit aromatischen Diisocyanaten (DE-OS 19 28 435) und durch Umsetzung von aromatischen Dicarbonsäurediarylestern mit aromatischen Diaminen hergestellt werden.

Alle diese Verfahren haben den Nachteil, daß sie auf den Einsatz von aktivierten, schwierig handhabbaren Monomeren, wie z. B. Dicarbonsäurechloriden, aromatischen Diisocyanaten oder aromatischen Dicarbonsäurediarylestern, angewiesen sind.

Es sind auch Verfahren bekannt, bei denen man aromatische Polyamide direkt durch Reaktion von aromatischen Dicarbonsäuren und aromatischen Diaminen in Gegenwart von aromatischen Phosphiten erhält. Als Lösemittel haben sich für dieses Verfahren N-Methylsäureamide, insbesondere N-Methylpyrrolidon, bewahrt. Mit anderen apolar aprotischen Lösemitteln wie z. B. Dimethylsulfoxid werden dagegen keine polymeren Amide erhalten (vgl. F. Higashi et al, J. Polym. Sci., Polym. Chem. Ed. 18, 1711 ff. (1980)).

Aus einer Zusammenfassung (vgl. S. M. Aharoni et al, J. Polym. Sci., Polym. Chem. Ed. 22, 2579 (1984) folgert, daß

- durch Zusatz von Lithium- oder Calciumchlorid das Molekulargewicht der Amide erhöht werden kann;
- das zum Einsatz kommende Phosphit Arylgruppen enthalten muß und vorzugsweise Triphenylphosphit ist;
- die Arylphosphite mindestens in einer solchen Menge eingesetzt werden müssen, daß auf 1 Mol umzusetzendem Amid 1 Mol einer Verbindung mit der Gruppierung

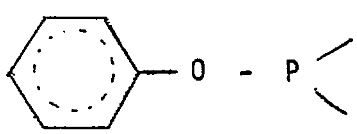

kommt, da diese Gruppierung im Laufe der Reaktion verbraucht wird und diese Reaktion die treibende Kraft der Umsetzung darstellt;
- der optimale Temperaturbereich zur Durchführung dieser Reaktion bei 80 bis 100 °C liegt, während bei Temperaturen deutlich über 100 °C das Molekulargewicht deutlich abnimmt,
- Pyridin für die Reaktion nicht notwendig ist, aber gleichwohl einen beschleunigenden Einfluß auf den Ablauf der Reaktion hat.

In der europäischen Offenlegungsschrift 0 099 997 wird schließlich ein Verfahren zur Herstellung von aromatischen Polyamiden beschrieben, bei dem aromatische Dicarbonsäuren mit aromatischen Diaminen in einem polaren Lösemittel in Gegenwart eines Dehydratisierungskatalysators wie z. B. einer P-haltigen Verbindung (Triphenylphosphit, phosphorige Säure oder Triethylphosphat) umgesetzt werden. Eigene Untersuchungen zeigten indessen, daß man weder mit Triphenylphosphit noch mit einer P-haltigen Säure wie z. B. hypophosphoriger Säure als Katalysator und Sulfolan als Lösemittel befriedigende Resultate erhält. Die Produkte, die man nach 3 bis 12 Stunden erhält, sind von schlechter Farbqualität. Setzt man elektronenreiche aromatische Diamine wie z.B. 4,4'-Diaminodiphenylether ein, erhält man nur nach langen Reaktionszeiten hochmolekulare Produkte, die durch die Bildung nicht identifizierter Nebenprodukte stark verfärbt sind. Setzt man dagegen elektronenarme Diamine wie z. B. 4,4'-Diaminodiphenylsulfon ein, versagt das Verfahren der-EP-OS 0 099 997 völlig. Es lassen sich nur stark verfärbte, oligomere Produkte herstellen.

Der Stand der Technik zeigt, daß die Herstellung hochmolekularer aromatischer Amide in empfindlicher und heute noch nicht überschaubarer Weise von zahlreichen Parametern abhängt. Die erheblich abweichenden Reaktionsbedingungen lassen es als unwahrscheinlich erscheinen, das Verfahren der EP-OS 0 099 997 mit denen der zuvor beschriebenen Verfahren aus dem Journal of Polymer Science erfolgreich zu kombinieren. Es erschien bei dieser Sachlage nicht möglich, hochmolekulare Polyamide von einwandfreier Farbqualität durch Umsatz von aromatischen Diaminen mit aromatischen Dicarbonsäuren zu erhalten.

Es wurde jetzt ein Verfahren gefunden, mit dem dies doch möglich ist. Dieses Verfahren besteht darin, daß man eine etwa äquimolare Mischung aus aromatischer Dicarbonsäure und aromatischem Diamin in Gegenwart einer mindestens katalytisch wirksamen Menge Phosphorverbindung und einer ebenfalls katalytisch wirksamen Menge eines 4-Dialkylaminopyridins in einem polar aprotischen Lösemittel bei Temperaturen oberhalb 180 °C umsetzt.

Bevorzugte Ausführungsformen dieses Verfahrens sind in den Ansprüchen 2 bis 13 beschrieben.

In Anbetracht der Tatsache, daß nach den Angaben von S. M. Aharoni et al., zur Herstellung von aromatischen Polyamiden stöchiometrische Mengen einer Phosphorverbindung erforderlich sind, erscheint der Befund überraschend, daß erfindungsgemäß katalytische Mengen nicht nur ebenso die Reaktion in Gang bringen sondern darüber hinaus zu erheblich besseren Ergebnissen führen. Darüber hinaus zeigt Vergleichsbeispiel D, daß auch stöchiometrische Mengen Chinolin zu völlig unbefriedigenden Ergebnissen führen.

Ein Vergleich des erfindungsgemäßen Verfahrens mit dem der EP-OS 0 099 997 (siehe Beispiele A und 2, B und 3, C und 4) läßt erkennen, daß der Zusatz der geringen Menge des 4-Dialkylaminopyridins einen ganz erheblichen Effekt auf die Bildung des Polyamids hat:
- Der J-Wert, der ein Maß für das Molekulargewicht darstellt, wird erheblich erhöht.
- Die Farbqualität des Polymeren wird deutlich verbessert.
- Die Polykondensationszeit wird drastisch reduziert.
- Die Ausbeute ist besser.

Erfindungsgemäß können folgende aromatische Dicarbonsäuren oder deren Mischungen eingesetzt werden:

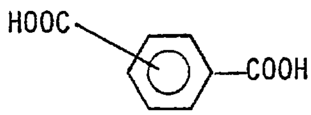

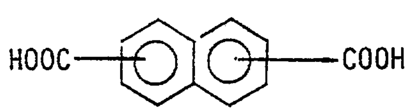

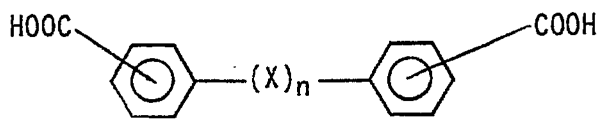

Dabei hat n die Bedeutung 0 oder 1 und X steht für folgende difunktionelle Reste: -O-, -S-, -CO-,$CH_2$- und -$SO_2$-.

Bevorzugt sind:
Terephthalsäure
Isophthalsäure
2,6-Naphthalindicarbonsäure
4,4'-Biphenyldicarbonsäure
4,4'-Diphenyletherdicarbonsäure
4,4'-Benzophenondicarbonsäure
4,4'-Diphenylsulfondicarbonsäure

Bis zu 40 Molprozent der soeben aufgeführten aromatischen Dicarbonsäuren kann durch folgende Säuren ersetzt werden:
- aliphatische Dicarbonsäuren oder deren Anhydride mit 2 bis 10 C-Atomen;
- aliphatische Oligoamide mit endständigen COOH-Gruppen, die durch Umsetzung von aliphatischen $C_{2-10}$-Dicarbonsäuen mit Lactamen und Polyalkylenpolyaminen mit bis zu 5 Aminogruppen und bis zu 10 C-Atomen erhalten werden;
- aromatische Tri- und Tetracarbonsäuren oder deren Anhydride mit 9 bis 22 C-Atomen.

Beispielhaft genannt seien:
- Maleinsäureanhydrid
- ein Oligoamid, bestehend aus 5 Molen Ethylendiamin und 6 Molen Hexandicarbonsäure der Formel

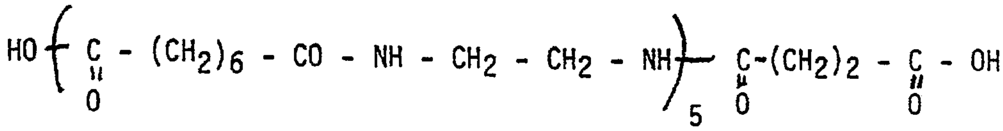

- ein Oligoamid, bestehend aus 10 Molen Laurinlactam und 1 Mol Dodecandisäure
- Trimellithsäureanhydrid und Pyromellithsäureanhydrid

Erfindungsgemäß können folgende aromatische Diamine oder deren Mischungen eingesetzt werden:

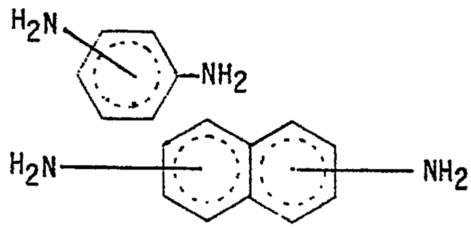

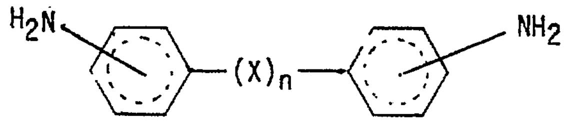

Dabei haben n und X die bereits aufgeführten Bedeutungen.

Bevorzugt sind:
para-Phenylendiamin
meta-Phenylendiamin
4,4'-Diaminodiphenylmethan
4,4'-Diaminodiphenylether
3,4'-Diaminodiphenylether
4,4'-Diaminodiphenylsulfid
4,4'-Diaminodiphenylsulfon

Bis zu 40 Molprozent der soeben aufgeführten aromatischen Diamine können durch folgende Amine ersetzt werden:
- aliphatisch Di- und Polyamine mit 2 bis 10 C-Atomen
- aliphatische Oligoamide mit endständigen $NH_2$-Gruppen, die durch Umsetzung der soeben aufgeführten Di- und/oder Polyamine mit Lactamen oder aliphatischen Di- und/oder Polycarbonäuren erhalten werden.

Beispielhaft seien genannt:
Dodecamethylendiamin
Oligoamid-12-diamin, hergestellt durch Polymerisation von 10 Molen Laurinlactam in Gegenwart von 1 Mol Hexamethylendiamin

Die katalytisch wirksame Phosphorverbindung umfaßt Verbindungen der Typen $PR_5$, $PR_3$, $HPR_2$ sowie die Anhydride $P_2O_5$ und $P_2O_3$. Dabei steht R für ein Halogen wie Chlor oder Brom, die OH-Gruppe, die OAr, wobei Ar ein gegebenenfalls alkylsubstituierter Phenylrest ist, oder den Alkoxyrest mit 1 bis 10 C-Atomen.

Beispielhaft seien aufgeführt:
Phosphorsäure,
Phosphorpentoxid,
Triphenylphosphat,
Tributylphosphat,
Triethylphosphit,
phosphorige und
hypophosphorige Säure.
Bevorzugt werden Triphenylphosphit und hypophosphorige Säure.

Die als Cokatalysator eingesetzten 4-Dialkylaminopyridine weisen die Struktur

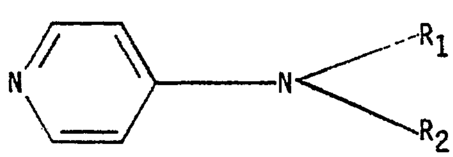

auf, wobei $R_1$ und $R_2$ entweder unabhängig voneinander für einen $C_{1-10}$-Alkylrest stehen oder zusammen mit dem Aminostickstoff einen Pyrrolidin- oder Piperidinring bilden können.

Bevorzugt sind:
4-Dimethylaminopyridin
4-Dibutylaminopyridin
4-Di-n-hexylaminopyridin
4-Piperidinylpyridin.

Die Pyridinderivate können gemäß Synthesis, 844, (1978), hergestellt werden.

Bezogen auf 100 Mole eingesetzter Dicarbonsäure werden jeweils 0,1 bis 10 Mol, vorzugsweise 1 - 5 Mole der P-Verbindung und des 4-Dialkylaminopypyridins eingesetzt. Die Polykondensation wird bei einer Temperatur zwischen 180 und 300 °C, vorzugsweise zwischen 200 und 260 °C, durchgeführt.

Üblicherweise arbeitet man unter Inertgas bei Normaldruck. Es kann jedoch, wenn dies aus irgendwelchen Gründen wünschenswert sein sollte, auch bei leichtem Über- oder Unterdruck gearbeitet werden. Die zur Erzielung ausreichend hochmolekularer Produkte notwendigen Reaktionzeiten liegen im allgemeinen zwischen 1 und 4 Stunden. Lediglich bei sehr reaktionsträgen Ausgangsverbindungen können auch deutlich längere Zeiten erforderlich sein.

Als Reaktionsmedium werden polare, aprotische, organische Lösemittel bevorzugt, die imstande sind, zumindest bei 180 °C die Ausgangsprodukte wie auch die polymeren Amide hinreichend zu lösen. Beispiele geeigneter Lösungsmittel sind N-Methylpyrrolidon-2 (NMP), N-Methyl-3-caprolactam, N,N-Dimethylacetamid, Dimethylsulfoxid, Sulfolan (Tetrahydrothiophendioxid) und Diphenylsulfon. Diese Lösungsmittel können allein oder als Mischung eingesetzt werden. Beispiele anderer Lösungsmittel, die in Kombination mit den oben erwähnten polaren, aprotischen Lösungsmittel eingesetzt werden können, sind Chlorbenzol, Dichlorbenzol, Nitrobenzol, Diphenylether, Anisol, Phenol und m-Kresol. Der Anteil der aprotischen, polaren Lösungsmittel sollte in diesen Mischungen 20 Gew.-% betragen. Bevorzugt wird Sulfolan.

Vorzugsweise wird das Verfahren in folgender Weise durchgeführt:

Man erhitzt die Lösung aus etwa äquimolaren Mengen aromatischer Dicarbonsäure und aromatischem Diamin in Gegenwart der Phosphorverbindung und des 4-Dialkylaminopyridins bei einer Feststoffkonzentration von 5 - 50 Gew.-% in einer Inertgasatmosphäre auf Temperaturen zwischen 200 und 260 °C, hält diese Temperatur etwa 1 bis 3 Stunden und isoliert sodann das Polyamid nach üblichen Verfahrensweisen.

Zur Herstellung von ausreichend hochmolekularen Produkten ist es notwendig, das während der Polykondensation gebildete Wasser aus dem Reaktionssystem zu entfernen. Gewöhnlich reicht hierzu das Über- bzw. Durchleiten des Inertgases aus. Es kann jedoch auch Vakuum angelegt und/oder durch (Azotrop)-Destillation ein Teil des Lösungsmittels zusammen mit dem Wasser entfernt werden.

Am Ende der Polykondensation erhält man eine mehr oder weniger viskose Lösung oder eine Suspension des Polymeren im eingesetzten Lösungsmittel. Die Isolierung der aromatischen Polyamide aus diesen Lösungen bzw. Suspensionen ist nicht kritisch; sie können entweder direkt weiterverarbeitet oder gegebenenfalls nach Verdünnung durch Zugabe von Antilösungsmittel gefällt werden.

Als Antilösungsmittel kommen niedrige Alkohole wie z. B. Methanol, Ethanol und Isopropanol, Ketone wie z. B. Aceton und Methylethylketon oder Wasser bzw. deren Mischungen in Frage.

Die folgenden Beispiele sollen das erfindungsgemäße Verfahren näher erläutern.

Beispiel 1

Einsatzstoffe:
16,60 g (0,1 Mol) Isophthalsäure
20,33 g (0,1025 Mol) 4,4'-Diaminodiphenylmethan
0,54 g $H_3PO_2$ (50 %ige wäßrige Lösung)
0,46 g 4-Dimethylaminopyridin
60 ml Sulfolan

Durchführung

Die Einsatzstoffe werden in einer Rührapparatur vorgelegt und durch fünffaches Evakuieren und anschließendes Belüften mit Stickstoff von Sauerstoffspuren befreit. Danach wird die Mischung unter Rühren und Stickstoffspülung (100 l/h) bei 130 °C Innentemperatur homogenisiert. Anschließend heizt man die Mischung innerhalb von 60 Minuten auf 230 °C auf. Nach 200 Minuten Polykonsationszeit (PK-Zeit) verdünnt man den deutlich viskos gewordenen Ansatz mit 100 ml Sulfolan und nach dem Abkühlen auf 160 °C mit 200 ml Dimethylformamid. Die erhaltene klare Lösung gießt man nach dem Erkalten unter Rühren in 1,5 l Wasser. Den entstandenen feinen Niederschlag saugt man ab, wäscht 2 × mit Wasser und 2 × mit Aceton nach und trocknet anschließend das Produkt bei 100 °C im Ölpumpenvakuum.

Ausbeute = 32 g
PK-Zeit = 200 Minuten bei 230 °C

J-Wert = 174 $cm^3/g$ (gemessen als 0,5 %ige Lösung in $H_2SO_4$ bei Raumtemperatur)
Farbe = weiß
Das IR-Spektrum weist auf eine aromatische Polyamidstruktur hin.

Beispiel 2

Einsatzstoffe:
16,60 g (0,1 Mol) Isophthalsäure
20,33 g (0,1025) Mol 4,4'-Diaminodiphenylmethan
1,05 g Triphenylphosphit
0,46 g 4-Dimethylaminopyridin
60 ml Sulfolan
Die Polykondensation erfolgt analog zu Beispiel 1.
Ausbeute = 31,5 g
PK-Zeit = 150 Minuten bei 230 °C
J-Wert = 160 $cm^3/g$
Das IR-Spektrum weist auf eine aromatische Polyamidstruktur hin.

Beispiel 3

Einsatzstoffe:
16,60 g (0,1 Mol) Isophthalsäure
20,60 g (0,103 Mol) 4,4'Diaminodiphenylether
0,54 g $H_3PO_2$ (50 %ige Lösung)
0,46 g 4-Dimethylaminopyridin
60 ml Sulfolan
Die Polykondensation erfolgt analog zu Beispiel 1.
Ausbeute = 32 g
PK-Zeit = 120 Minuten bei 230 °C
J-Wert = 54 $cm^3/g$ (gemessen als 0,5 %ige Lösung in N-Methyl-2-pyrrolidon bei Raumtemperatur)
Farbe = fast weiß
Das IR-Spektrum weist auf Ethergruppen sowie eine aromatische Polyamidstruktur hin.

Beispiel 4

Einsatzstoffe:
16,60 g (0,1 Mol) Isophthalsäure
24,83 g (0,1 Mol) 4,4'-Diamindiphenylsulfon
1,05 g Triphenylphosphit
0,60 g 4-Dibutylaminopyridin
60 ml Sulfolan
Die Polykondensation erfolgt analog zu Beispiel 1.
Ausbeute = 35,5 g
PK-Zeit = 180 Minuten bei 230 °C
360 Minuten bei 250 °C
J-Wert = 35 $cm^3/g$ (0,5%ige Lösung in NMP)
Farbe = weiß
Das IR-Spektrum weist auf Sulfongruppen sowie eine aromatische Polyamidstruktur hin.

Beispiel 5

Einsatzstoffe:
16,60 g (0,1 Mol) Terephthalsäure
20,33 g (0,1025 Mol) 4,4'-Diaminodiphenylmethan
1,05 g Triphenylphosphit
0,46 g 4-Dimethylaminopyridin
60 ml Sulfolan
Im Unterschied zur Durchführung gemäß Beispiel 1 wird der Reaktionsansatz während der Polykondensationsphase nach 60, 120 und 180 Minuten jeweils mit 50 ml Sulfolan versetzt. Das Reaktionsprodukt wird durch Fällung mit einem Lösemittelgemisch aus Methanol und Wasser im Verhältnis 1 : 1 isoliert.
Ausbeute = 31 g
PK-Zeit = 60 Minuten bei 230 °C
150 Minuten bei 250 °C
J-Wert = 78 $cm^3/g$ (0,5 %ige Lösung in $H_2SO_4$)

Beispiel 6

Einsatzstoffe:
8,30 g (0,1 Mol) Isophthalsäure
8,30 g (0,1 Mol) Terephthalsäure
20,30 g (0,1025 Mol) 4,4'-Diaminodiphenylmethan
1,05 g Triphenylphosphit
0,48 g 4-Dimethylaminopyridin
60 ml Sulfolan

Im Unterschied zur Durchführung gemäß Beispiel 1 wird der Reaktionsansatz nach 90 Minuten Polykondensationszeit mit 50 ml Sulfolan versetzt. Das Reaktionsprodukt wird durch Fällung mit einem Lösemittelgemisch aus Methanol und Wasser im Verhältnis 1 : 1 isoliert.
Ausbeute = 31 g
PK-Zeit = 60 Minuten bei 230 °C
30 Minuten bei 250 °C
J-Wert = 187 cm³/g (0,5 %ige Lösung in $H_2SO_4$)

Beispiel 7

Einsatzstoffe:
16,60 g (0,1 Mol) Isophthalsäure
10,16 g 4,4'-Diaminodiphenylmethan
12,73 g 4,4'-Diaminodiphenylsulfon
1,20 g Triphenylphosphit
0,48 g 4-Dimethylaminopyridin
60 ml Sulfolan

Im Unterschied zur Durchführung gemäß Beispiel 1 wird das Reaktionsprodukt durch Fällung mit einem Lösemittelgemisch aus Methanol und Wasser im verhältnis 1 : 1 isoliert
Ausbeute = 33 g
J-Wert = 118 cm³/g (0,5 %ige Lösung in NMP)

Beispiel 8

Einsatzstoffe:
16,60 g (0,1 Mol) Isophthalsäure
20,33 g (0,1025 Mol) 4,4'-Diaminodiphenylmethan
0,54 g $H_3PO_2$ (50 %ige wäßrige Lösung)
0,46 g 4-Dimethylaminopyridin
60 ml Diphenylsulfon

Im Unterschied zur Durchführung gemäß Beispiel 1 wird das Reaktionsprodukt durch Eingießen in Methanol und anschließendes Auskochen des ausgefallenen Polyamids mit Aceton isoliert.
Ausbeute = 30 g
J-Wert = 112 cm³/g (0,5 %ige Lösung in N-Methylpyrrolidon-2)

Beispiel 9

Einsatzstoffe:
20,2 g (0,1 Mol) 4,4'-Diaminodiphenylether
8,4 g (0,05 Mol) Isophthalsäure
10,8 g (0,05 Mol) 1,4-Naphthalindicarbonsäure
0,54 g $H_3PO_2$ (50 %ige wäßrige Lösung)
0,46 g 4-Dimethylaminopyridin
60 ml Sulfolan

Die Polykondensation erfolgt analog zu Beispiel 1. Das Reaktionsprodukt wird durch Fällung mit einem Lösungsmittelgemisch aus Methanol und $H_2O$ im Volumenverhältnis 1 : 1 isoliert.
Ausbeute = 34,1 g
PK-Zeit = 60 Minuten bei 230 °C
120 Minuten bei 250 °C
J-Wert = 67 cm³/g (0,5 %ige Lösung in NMP)

Beispiel 10

Einsatzstoffe:
5,13 g (30,9 mmol) Isophthalsäure
8,17 g (41,2 mmol) 4,4'-Diaminodiphenylmethan

21,7 g (10,9 mmol) Oligoamid-12-dicarbonsäure ($M_n$ = 2000)
0,54 g $H_3PO_2$ (50 %ige wäßrige Lösung)
0,46 g 4-Dimethylaminopyridin
85 ml Sulfolan

Durchführung

Isophthalsäure und 4,4'-Diaminodiphenylmethan werden in Gegenwart des Katalysators in 25 ml Sulfolan 120 Minuten bei 250 °C vorkondensiert, dann wird die Oligoamid-12-dicarbonsäure und das restliche Sulfolan zugesetzt und 120 Minuten bei 250 °C polykondensiert. Den auf 130 °C abgekühlten, hochviskosen Reaktionsansatz verdünnt man anschließend mit 500 ml Dimethylformamid. Das Produkt isoliert man durch Zugabe von 1000 ml Methanol zu der 60 °C warmen Mischung. Es wird abgenutscht, mit Methanol gewaschen und anschließend im Ölpumpenvakuum bei 50 - 60 °C getrocknet.
Ausbeute = 32 g
$M_n$ = 35000 g/Mol (laut GPC)
Farbe = weiß
NMR (Hexafluorisopropanol): C-12-Amid- bzw. aromatische Amid-Blöcke.

Beispiel 11

Einsatzstoffe:
16,6 g (0,1 Mol) Isophthalsäure
24,83 g (0,1 Mol) 4,4'-Diaminodiphenylsulfon
0,6 g $H_3PO_4$ (85 %ig)
0,46 g 4-Dimethylaminopyridin
60 ml Sulfolan

Durchführung

wie Beispiel 4
Ausbeute = 34,8 g
J-Wert = 36 $cm^3$/g (in NMP)
Farbe = weiß

Vergleichsbeispiel A (gemäß EP-PS 0 099 997)

Einsatzstoffe:
16,60 g (0,1 Mol) Isophthalsäure
20,33 g (0,1025 Mol) 4,4'-Diaminodiphenylmethan
1,05 g Triphenylphosphit
60 ml Sulfolan
Die Polykondensation erfolgt analog zu Beispiel 1.
Ausbeute = 31 g
PK-Zeit = 180 Minuten bei 230 °C
120 Minuten bei 250 °C
IR-Spektrum = aromatisches Polyamid
J-Wert = 66 $cm^3$/g (gemessen als 0,5 %ige Lösung in $H_2SO_4$ bei Raumtemperatur)
Farbe = gelb

Vergleichsbeispiel B (gemäß EP-PS 0 099 997)

Einsatzstoffe:
16,60 g (0,1 Mol) Isophthalsäure
20,33 g (0,103 Mol) 4,4'-Diaminodiphenylether
0,54 g $H_3PO_2$ (50 %ige Lösung)
60 ml Sulfolan
Die Polykondensation erfolgt analog zu Beispiel 1.
Ausbeute = 31,0 g
PK-Zeit = 480 Minuten bei 230 °C
IR-Spektrum = aromatisches Polyamid mit Ethergruppen
J-Wert = 35 $cm^3$/g (0,5 %ige Lösung in NMP)
Farbe = grau-blau

Vergleichsversuch C (gemäß EP-PS 0 099 997)

Einsatzstoffe:
16,60 g (0,1 Mol) Isophthalsäure
24,83 g (0,1 Mol) 4,4-Diaminodiphenylsulfon
1,05 g Triphenylphosphit
60 ml Sulfolan
10 g Diphenylether
Ausbeute = 29 g
PK-Zeit = 90 Minuten bei 230 °C
720 Minuten bei 250 °C
J-Wert = 13 $cm^3/g$ (0,5 %ige Lösung in N-Methylpyrrolidon-2)
Farbe = dunkelgrün

Vergleichsbeispiel D

Einsatzstoffe:
16,60 g (0,1 Mol) Isophthalsäure
24,83 g (0,1 Mol) 4,4'-Diaminodiphenylsulfon
1,24 g Triphenylphosphit
15,20 g Chinolin
60,00 g Sulfolan
Im Unterschied zur Durchführung gemäß Beispiel 1 wird das Produkt durch Eingießen in ein Lösemittelgemisch aus Methanol und Wasser im Verhältnis 1 : 1 isoliert.
PK-Zeit = 180 Minuten bei 230 °C
360 Minuten bei 250 °C
J-Wert = 7 $cm^3/g$ (0,5 %ige Lösung in N-Methylpyrrolidon-2)
Farbe = gelb

Vergleichsbeispiel E (gemäß EP-PS 0 099 997, vgl. Vergleichsbeispiel C)

Einsatzstoffe:
16,6 g (0,1 Mol) Isophthalsäure
24,83 g (0,1 Mol) 4,4'-Diaminodiphenylsulfon
1,05 g Triphenylphosphit
60 ml Sulfolan
10 ml NMP
Ausbeute = 31,0 g
PK-Zeit = 120 Minuten bei 230 °C
180 Minuten bei 250 °C
J-Wert = 12 $cm^3/g$ (in N-Methylpyrrdidon-2)
Farbe = grün

**Patentansprüche**

1. Verfahren zur Herstellung von unverfärbten, hochmolekularen aromatischen Polyamiden durch Polykondensation von aromatischen Dicarbonsäuren mit aromatischen Diaminen in Lösung in Gegenwart eines Phosphorkatalysators bei Temperaturen oberhalb von 180°C, dadurch gekennzeichnet, daß man als Cokatalysator ein 4-Dialkylaminopyridin der Struktur

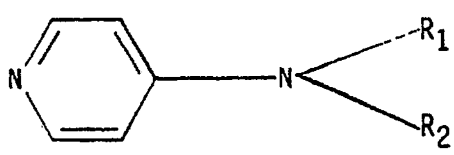

einsetzt, wobei $R_1$ und $R_2$ entweder unabhängig voneinander für einen $C_{1-10}$-Alkylrest stehen oder zusammen mit dem Aminostickstoff einen Pyrrolidin- oder Piperidinring bilden können.

2. Verfahren nach Anspruch 1, dadurch gekennzeichnet, daß man als aromatische Dicarbonsäure eine Verbindung der Formel

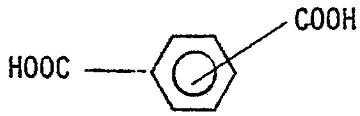
,
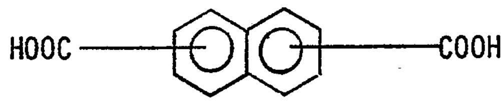
oder
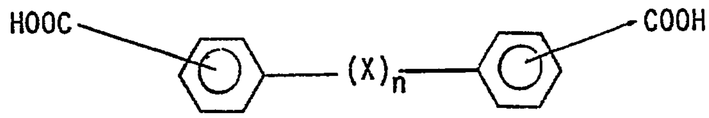

mit n = 0,1 und
X = –O–, –S–, $-CH_2-$, –CO–, $-SO_2-$ einsetzt.

3. Verfahren nach Anspruch 2, dadurch gekennzeichnet, daß man als aromatische Dicarbonsäure wenigstens einen Vertreter aus der Gruppe: Terephthalsäure, Isophthalsäure, Naphthalindicarbonsäure, 4,4′-Biphenyldicarbonsäure, 4,4′-Diphenyletherdicarbonsäure, 4,4′-Benzophenondicarbonsäure oder 4,4′-Diphenylsulfondicarbonsäure einsetzt.

4. Verfahren nach Anspruch 1, dadurch gekennzeichnet, daß man als aromatische Dicarbonsäure 1,4-Naphthalindicarbonsäure einsetzt.

5. Verfahren nach Ansprüchen 1 bis 4, dadurch gekennzeichnet, daß man als aromatisches Diamin eine Verbindung der Formel

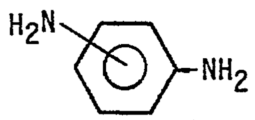
,
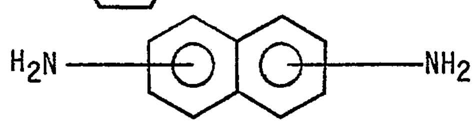
oder
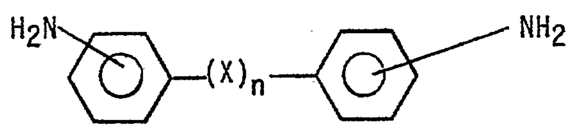

mit n = 0,1 und
X = –O–, –S–, $-CH_2-$, –CO– oder $-SO_2-$ einsetzt.

6. Verfahren nach Anspruch 5, dadurch gekennzeichnet, daß man als aromatisches Diamin wenigstens einen Vertreter aus der Gruppe: p-Phenylendiamin, m-Phenylendiamin, 4,4′-Diaminodiphenylmethan, 4,4′-Diaminodiphenylether, 4,4′-Diaminobiphenyl, 4,4′-Diaminodiphenylsulfid, 4,4′-Diaminodiphenylsulfon oder 3,4′-Diaminodiphenylether einsetzt.

7. Verfahren nach den Ansprüchen 1 bis 5, dadurch gekennzeichnet, daß man bis zu 40 Molprozent der aromatischen Dicarbonsäuren und/oder Diamine durch aliphatische Dicarbonsäuren bzw. aliphatische Diamine ersetzt.

8. Verfahren nach den Ansprüchen 1 bis 7, dadurch gekennzeichnet, daß man als Phosphorkatalysator eine Verbindung vom Typ
$P_2O_m$ mit m = 3,5
$PR_5$, $PR_3$ oder $HPR_2$ mit R = Hal, OH, OAr, OAlk
einsetzt, wobei Hal Chlor oder Brom bedeutet, Ar ein gegebenenfalls alkylsubstituierter Phenylrest ist und Alk für einen Alkylrest mit bis zu 10 C-Atomen steht.

9. Verfahren nach Anspruch 8, dadurch gekennzeichnet, daß man als Phosphorkatalysator hypophosphorige Säure einsetzt.

10. Verfahren nach Anspruch 8, dadurch gekennzeichnet, daß man als Phosphorkatalysator Triphenylphosphit einsetzt.

11. Verfahren nach den Ansprüchen 1 bis 10, dadurch gekennzeichnet, daß man als Cokatalysator 4-Dimethylaminopyridin einsetzt.

12. Verfahren nach den Ansprüchen 1 bis 11, dadurch gekennzeichnet, daß man den Phosphorkatalysator und den Cokatalysator jeweils in Mengen von 0,2 bis 10, vorzugsweise 1 bis 5, Mol %, bezogen auf die eingesetzte Menge der Dicarbonsäure, einsetzt.

13. Verfahren nach den Ansprüchen 1 bis 12, dadurch gekennzeichnet, daß man die Polykondensation in Sulfolan oder Diphenylsulfon unter Inertgas durchführt.

**Revendications**

1. Procédé pour la préparation de polyamides aromatiques non colorées, de poids moléculaire élevé, par polycondensation d'acides dicarboxyliques aromatiques avec des diamines aromatiques, en solution, en présence d'un catalyseur au phosphore, à des températures supérieures à 180°C, caractérisé par le fait que l'on utilise, comme co-catalyseur, une 4-dialkyl-amino-pyridine de structure

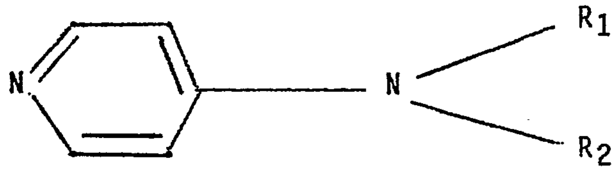

,

$R_1$ et $R_2$ pouvant soit représenter, indépendamment l'un de l'autre, un reste alkyle en $C_1$ à $C_{10}$, soit former, conjointement avec l'azote de l'amine, un anneau pyrrolidine ou pipéridine.

2. Procédé selon la revendication 1, caractérisé par le fait que l'on utilise, comme acide dicarboxylique aromatique, un composé de formule

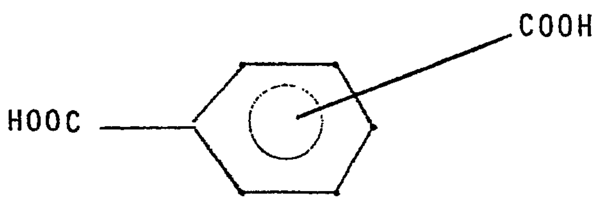

,

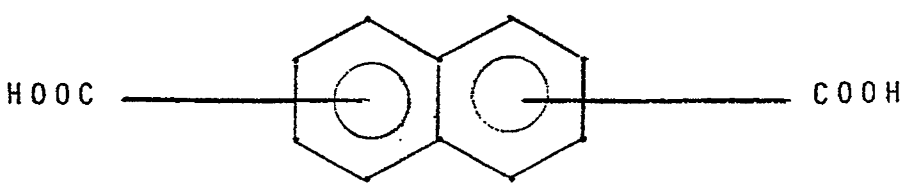

ou

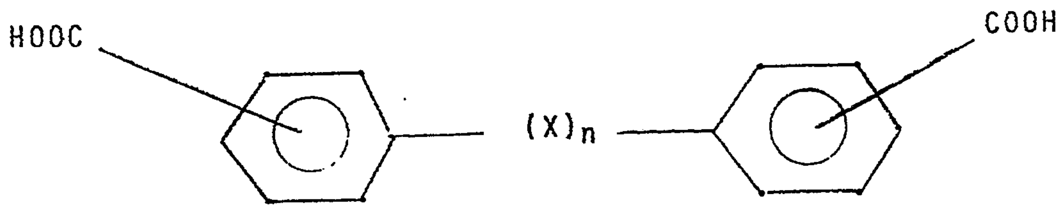

n étant égal à zéro ou à l'unité, et
X représentant $-O-$, $-S-$, $-CH_2-$, $-CO-$, $-SO_2-$.

3. Procédé selon la revendication 2, caractérisé par le fait que l'on utilise, comme acide dicarboxylique aromatique, au moins l'un des représentants du groupe constitué par: l'acide téréphtalique, l'acide isophtalique, l'acide naphtalène-dicarboxylique, l'acide 4,4'-diphényl-dicarboxylique, l'acide 4,4'-diphényl-éther-dicarboxylique, l'acide 4,4'-benzophénone-dicarboxylique ou l'acide 4,4'-diphényl-sulfone-dicarboxylique.

4. Procédé selon la revendication 1, caractérisé par le fait que l'on utilise, comme acide dicarboxylique aromatique, l'acide 1,4-naphtalène-dicarboxylique.

5. Procédé selon les revendications 1 à 4, caractérisé par le fait que l'on utilise, comme diamine aromatique, un composé de formule:

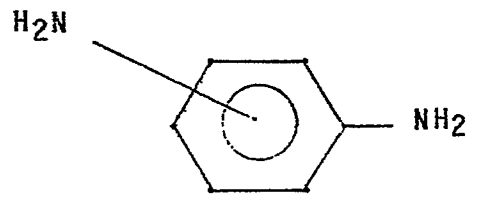

,

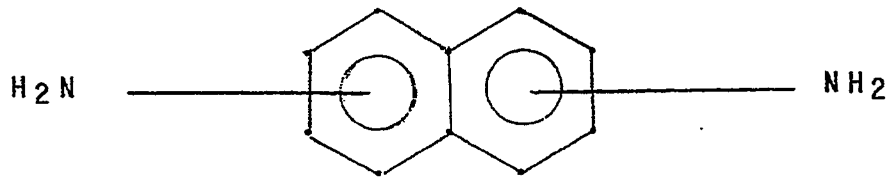

ou

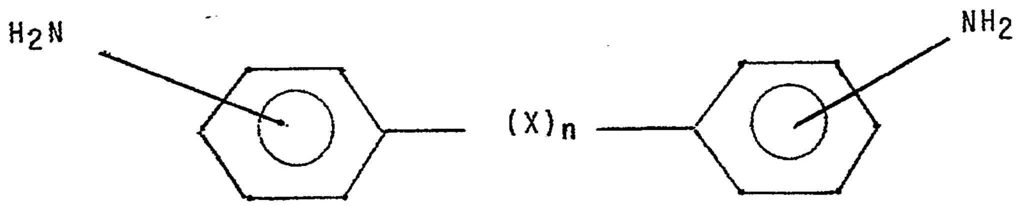

n étant égal à zéro ou à l'unité, et
X représentant –O–, –S–, $-CH_2-$, –CO–, $-SO_2-$.

6. Procédé selon la revendication 5, caractérisé par le fait que l'on utilise, comme diamine aromatique, au moins l'un des représentants du groupe constitué par:
la para-phénylène-diamine, la méta-phénylène-diamine, le 4,4'-diamino-diphényl-méthane, l'éther 4,4'-diamino-diphénylique, le 4,4'-diamino-biphényle, le sulfure de 4,4'-diamino-diphényle, la 4,4'-diamino-diphényl-sulfone ou l'éther 3,4'-diamino-diphénylique.

7. Procédé selon les revendications 1 à 5, caractérisé par le fait que l'on remplace jusqu'à 40 moles-% des acides dicarboxyliques et/ou des diamines aromatiques par des acides dicarboxyliques aliphatiques ou par des diamines aliphatiques.

8. Procédé selon les revendications 1 à 7, caractérisé par le fait que l'on utilise comme catalyseur au phosphore, un composé du type
$P_2O_m$,
où m est égal à 3 ou 5,
du type: $PR_5$, $PR_3$ ou $HPR_2$,
où R représente un halogène, un hydroxyle, un radical OAr ou OAlk, l'halogène étant du chlore ou du brome, Ar étant un reste phényle éventuellement substitué par un alkyle et Alk représente un radical alkyle comportant jusqu'à 10 atomes de carbone.

9. Procédé selon la revendication 8, caractérisé par le fait que l'on utilise, comme catalyseur au phosphore, l'acide hypophosphoreux.

10. Procédé selon la revendication 8, caractérisé par le fait que l'on utilise, comme catalyseur au phosphore, le phosphite de triphényle.

11. Procédé selon les revendications 1 à 10, caractérisé par le fait que l'on utilise, comme catalyseur au phosphore, la 4-diméthyl-amino-pyridine.

12. Procédé selon les revendications 1 à 11, caractérisé par le fait que l'on utilise le catalyseur au phosphore et le co-catalyseur chaque fois dans des quantités de 0,2 à 10, de préférence de 1 à 5 moles-%, relativement à la quantité d'acide dicarboxylique qui est utilisée.

13. Procédé selon les revendications 1 à 12, caractérisé par le fait que l'on effectue la polycondensation dans du sulfolane ou dans de la diphényl-sulfone.

## Claims

1. A process for the preparation of uncoloured high-molecular-weight aromatic polyamides by condensation of aromatic dicarboxylic acids with aromatic diamines in solution in the presence of a phosphorus catalyst at temperatures above 180°C, characterised in that as cocatalyst is used a 4-dialkylaminopyridine of the structure

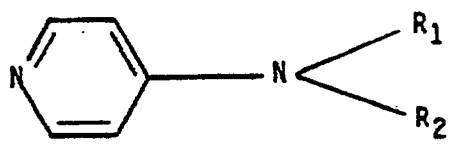

in which $R_1$ and $R_2$ either independently of one another can stand for a $C_{1-10}$-alkyl radical or together can form a pyrrolidine or piperidine ring with the amino nitrogen atom.

2. A process according to claim 1, characterised in that as aromatic dicarboxylic acid is used a compound of the formula

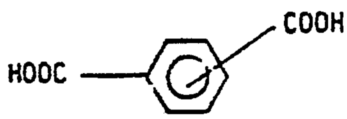

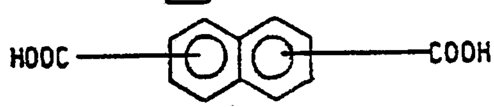 or

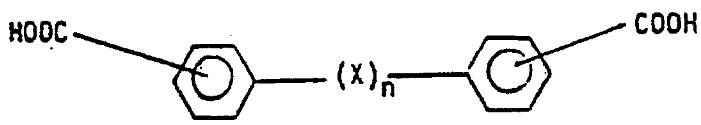

in which n is 0 or 1 and X is $-O-$, $-S-$, $-CH_2-$, $-CO-$, or $-SO_2-$.

3. A process according to claim 2, characterised in that as aromatic dicarboxylic acid is used at least one representative from the group terephthalic acid, isophthalic acid, naphthalenedicarboxylic acid, 4,4'-biphenyl-dicarboxylic acid, diphenyl ether-4,4'-dicarboxylic acid, 4,4'-benzophenonedicarboxylic acid or diphenyl sulfone-4,4'-dicarboxylic acid.

4. A process according to claim 1, characterised in that as aromatic dicarboxylic acid is used 1,4-naphthalenedicarboxylic acid.

5. A process according to any of claims 1 to 4, characterised in that as aromatic diamine is used a compound of the formula

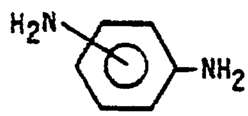

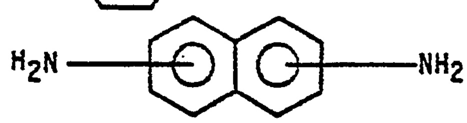 or

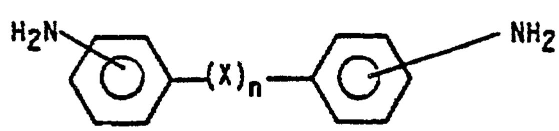

in which n is 0 or 1 and X is $-O-$, $-S-$, $-CH_2-$, $-CO-$ or $-SO_2-$.

6. A process according to claim 5, characterised in that as aromatic diamine is used at least one representative from the group p-phenylene diamine, m-phenylene-diamine, 4,4'-diaminodiphenylmethane, 4,4'-diaminodiphenyl ether, 4,4'-diaminobiphenyl, 4,4'-diaminodiphenyl sulfide, 4,4'-diaminodiphenyl sulfone or 3,4'-diaminodiphenyl ether.

7. A process according to any of claims 1 to 5, characterised in that up to 40 mol percent of the aromatic dicarboxylic acids and/or diamines is replaced by aliphatic dicarboxylic acids and/or aliphatic diamines, respectively.

8. A process according to any of claims 1 to 7, characterised in that as phosphorus catalyst is used a compound of the type $P_2O_m$ where m is 3 or 5,
$PR_5$, $PR_3$ or $HPR_2$ where R is Hal, OH, OAr or OAlk,
in which Hal denotes chlorine or bromine, Ar is an unsubstituted or alkyl-substituted phenyl radical and Alk stands for an alkyl radical having up to 10 C atoms.

9. A process according to claim 8, characterised in that as phorphorus catalyst is used hypophosphorous acid.

10. A process according to claim 8, characterised in that as phosphorus catalyst is used triphenyl phosphite.

11. A process according to any of claims 1 to 10, characterised in that as cocatalyst is used 4-dimethylaminopyridine.

12. A process according to any of claims 1 to 11, characterised in that the phosphorus catalyst and the cocatalyst are each used in amounts of 0.2 to 10, preferably 1 to 5, mol %, relative to the amount of dicarboxylic acid used.

13. A process according to any of claims 1 to 12, characterised in that the polycondensation is carried out in sulfolane or diphenyl sulfone under an inert gas.